Europäisches Patentamt

(19) European Patent Office  (11) Publication number: **0 074 721**

Office européen des brevets **A1**

(12) **EUROPEAN PATENT APPLICATION**

(21) Application number: **82304290.8**

(22) Date of filing: **13.08.82**

(51) Int. Cl.³: **H 04 M 17/02**

(30) Priority: **28.08.81 GB 8126371**
**02.12.81 GB 8136299**

(43) Date of publication of application:
**23.03.83 Bulletin 83/12**

(84) Designated Contracting States:
**BE CH DE FR LI SE**

(71) Applicant: **The General Electric Company, p.l.c.**
**1 Stanhope Gate**
**London W1A 1EH(GB)**

(72) Inventor: **Hepburn, Eric**
**138 Humber Road**
**Coventry, CV3 1BG West Midlands(GB)**

(72) Inventor: **Harcourt, Michael David**
**57 Harold Road**
**Coventry, CV2 5LB West Midlands(GB)**

(72) Inventor: **Allwood, Peter Henry**
**26 Sewall Highway**
**Coventry CV3 2NN, West Midlands(GB)**

(74) Representative: **Dolwin, John Davison**
**Central Patent Department The General Electric**
**Company plc Hirst Research Centre East Lane**
**Wembley Middlesex HA9 7PP(GB)**

(54) **Coin collecting apparatus.**

(57) A coin collecting box for insertion between a telephone instrument (1) and a line (2,2') to a telephone exchange includes a validator (7) and a dial pulse detector (9) which provide respective signals to a control circuit (8) which may be a microprocessor. The control circuit (8) determines from signals on the line from the telephone (1) whether the call is permitted. If the call is not permitted the control (8) causes a switch (5) to interrupt the connection to the line (2). A key operated switch (15) provides signals to the control circuit (8) which cause that circuit to permit any calls from the associated telephone (1).

Fig.1

Croydon Printing Company Ltd.

-2-

The present invention relates to coin collecting apparatus and in particular to such apparatus for use in collecting revenue due for use of telecommunications apparatus.

Providing coin collecting telephone apparatus (payphones) may be an expensive operation. Additional apparatus is necessary in telephone exchanges either to provide complete control of revenue collection (by for example tone signals to cause opening of coin entry slots, forwarding warning signals ("paytone") etc. or to provide metering pulses to enable the rate of revenue collection to be determined at the terminal apparatus. At some partially public locations (for example in public houses, small shops etc.) persons already having a personal telephone may wish to provide the availability of a coin-collecting telephone as a service to customers without the expense of providing the kind of coin collecting apparatus requiring major equipment provisioning by the telephone authorities.

It is one object of the present invention to provide coin collecting apparatus which is arranged for insertion between a telephone instrument and a conventional subscribers'' line to a telephone exchnage and which is capable of providing at least some of the facilities normally associated with a payphone with little (if any) additional apparatus at the exchange.

According to the present invention, coin collecting apparatus for insertion in a line from a telephone instrument to a telephone exchange comprises a pair of terminals for connection to a telephone instrument, a pair of terminals for connection to a line to a telephone exchange, an electrical path between the two pairs of terminals, electrically operable switching means which is connected in the electrical path between the terminals and which is arranged selectively either to complete the electrical path or to interrupt the electrical path between the two pairs of terminals, a payment path to allow a user of the apparatus to provide payment for a call by presentation of a coin, token or other payment device, validation means which is connected to the payment path and which is arranged to provide a signal indicative of the validity of a payment offered, and control means which is arranged to monitor signals on the electrical path which signals determine the destination of a call, said control means also being arranged to determine from the signals on the electrical path and from the signal provided by the validation means whether the call is a permitted call and if the call is not a permitted call to cause the switching means to interrupt said electrical path so as to prevent the continuation of such a call.

Preferably the control means is also arranged to permit signals characterising a call to an emergency number without presentation of a coin, token or other payment device.

The apparatus may also include a detection circuit arranged to determine when a call is answered, said detection circuit providing a signal to the control means to cause the control means to effect collection of the payment offered.

The control means may include timers such that after a predetermined time has elapsed since the detection of a call being answered the control means causes a signal requesting presentation of a payment to be sent to a connected telephone instrument.

In one embodiment the apparatus includes a real time clock which is arranged to provide signals representative of the actual time, a data store for storing data at least a part of which provides a conversion from time of day to charge rate for each of a plurality of charging zones and at least another part of which provides a conversion from a numerical code to one of the charging zones for each of a plurality of numerical codes and the control means is arranged to determine from signals which determine the destination of a call the predetermined time at which the signal requesting presentation of a payment is sent. The apparatus may be arranged to cause the signal requesting presentation of a payment to be sent at periodic intervals and may be arranged to cause the switching means to interrupt the electrical path if a further payment is not offered within a further predetermined time.

The apparatus may include a key operable switch which, when operated, causes the control means to permit any call to be made from a connected telephone instrument.

The control means may also be arranged to cause display means to indicate the number of charging periods since the commencement of a call.

Coin collecting apparatus in accordance with the invention will now be described with reference to the accompanying drawings of which:

Figure 1 shows the electrical circuit of the apparatus in block schematic form;

Figure 2 shows a housing for the apparatus;

Figure 3 shows a modification for the apparatus of Figure 1 to permit variable charging rates; and

Figures 4, 5 and 6 are data tables pertaining to the apparatus as modified in Figure 3.

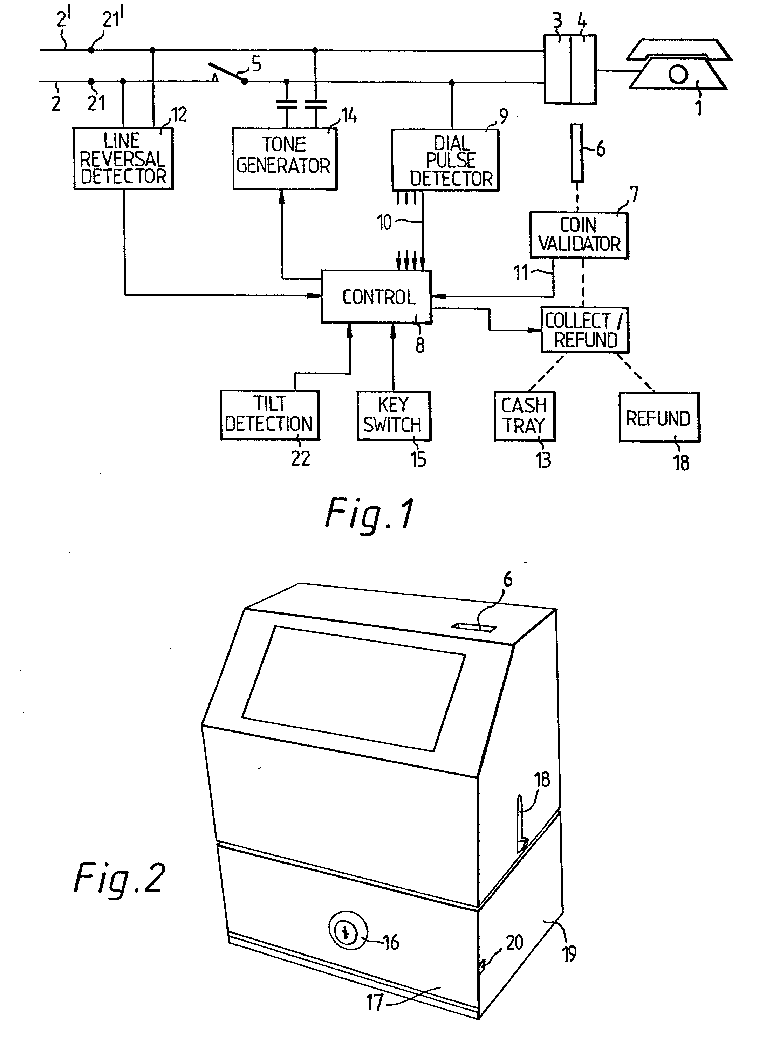

Referring to Figures 1 and 2 the apparatus for insertion between a telephone instrument 1 and a line 2, 2' to a telephone exchange comprises a pair of terminals housed in a socket 3 to which a plug 4 on the lead from the telephone instrument 1 may be fitted. The socket 3 is connected to the line 2, 2" by way of a pair of terminals 21, 21' so that the telephone 1 may communicate with the line 2, 2' in the normal manner provided that a switch contact 5 in the line 2 is closed.

A coin slot 6 is provided arranged to pass only a predetermined value of coinage with an inserted coin being held on a coin runway (not shown) after validation by a coin validator 7. An inserted coin is held on the coin runway until a control circuit 8 determines as hereinafter described whether the coin is to be collected or refunded to a user of the apparatus.

A dialling detection circuit 9 which may be for example an earth imbalance detector monitors the line 2 to determine which digits (if any) are dialled by a user of the telephone instrument 1. Detected digits are forwarded by way of connections 10 to the control circuit 8 which may be a microprocessor.

When the handset of the telephone instrument 1 is lifted by a user of the telephone, dial tone will be received by the instrument in the normal manner. If a coin is inserted in the apparatus its validity is checked by the coin validation circuit 7 which is arranged to send a signal to the control circuit 8 by way of a connection 11. As each digit is dialled by the user of the telephone instrument 1 it is detected by the detection circuit 9 and forwarded to the control circuit 8.

The control circuit may be arranged to cause the contact 5 to release on detection of specified first digits (for example '1') to prevent the telephone being used for access to operator services. Alternatively or additionally the control circuit 8 may cause the contact 5 to open if more than a predetermined number of digits are dialled. which number of digits are sufficient for setting up a "local" telephone call.

When dialling has been completed the control circuit 8 monitors the line 2, 2' by way of a line reversal detector 12 to determine whether the call has been answered. When the call is answered, as indicated by the detector 12 detecting a line reversal returned from the exchange, the control circuit 8 causes a collection relay (not shown) to release the coin held on the runway (not shown) such that the coin enters a cash tray 13.

The line reversal detector 12 may be replaced by a tone detector (not shown) if local telephone exchanges are arranged to provide a tone rather than a line reversal on answer. If neither a line reversal nor a tone signal are available the apparatus may be fitted with a push button and may be arranged to prevent speech from the telephone instrument 1 reaching the line 2 until the button has been depressed at which time the inserted coin is released to the cash tray 13.

The control circuit 8 may also be arranged to time each call and to cause a tone to be injected on to the line 2, 2' by a tone generator 14 to request the insertion of a further coin after a predetermined period. If a further coin is not inserted the control circuit 8 causes the contact 5 to open to release the exchange connection from the line 2, 2'.

The apparatus may be arranged to permit the dialling of a predetermined number of digits (say three) without insertion of a coin to enable calls to emergency services to be made. The control circuit 8 may apply selectable barring of particular first digits to prevent calls to (for example) operator services being made.

To enable the telephone instrument 1 to be used for all services normally available from the telephone exchange a key operated switch 15 is provided so that the owner/operator of the telephone may use the telephone instrument 1 without insertion of coins and without restriction.

The switch 15 may be incorporated in a lock 16 of a panel 17 provided for access to the cashtray 13. The lock 16 is arranged such that with the key in a vertical position, the key may be removed from the lock leaving the panel 17 closed. When the key is turned approximately half way towards a horizontal position, unrestricted calls may be made from the telephone instrument 1 with the panel 17 still closed. Turning the key to the horizontal position allows the panel 17 to be opened for access to the cash tray 13.

The key is arranged to be held by the lock except when the key is in the vertical position.

If a coin is inserted and the handset of the telephone instrument 1 is replaced without completing a call (or after an unanswered call) the control circuit 8 is arranged to operate a refund switch to cause the coin to leave the runway (not shown) by way of a refund chute 18.

The socket 3 is fitted behind the panel 17 so that unauthorised disconnection of the telephone instrument 1 is prevented when the panel 17 is locked. An exit point 20 for the lead of the telephone instrument is provided in a side panel 19 of the apparatus.

The apparatus is powered from the exchange line 2, 2' in known manner and may be arranged to include a secondary battery rechargeable from the line 2, 2'.

It will be appreciated that the contact 5 may be a contact of an electromagnetically operable relay (not shown) or may be implemented by use of a semiconductor switch.

It will be realised that the apparatus may be adapted for call payment to be made by coins or coin-like tokens. Alternatively or additionally the apparatus may be adapted to operate with credit payment means such as a card including an electrically readable or alterable magnetic strip.

Since the apparatus is intended to be portable a tilt detector 22, which may be for example a mercury wetted reed contact, is arranged to forward a signal to the control 8 if the apparatus is picked up and shaken or tilted for example in an attempt to cause an inserted coin to enter the refund slot 18. If such a signal is received from the tilt detector 22, the control 8 causes the contact 5 to disconnect the line 2 to the exchange. The control 8 will ignore any signal received from the tilt detector if the keyswitch 15 is operated.

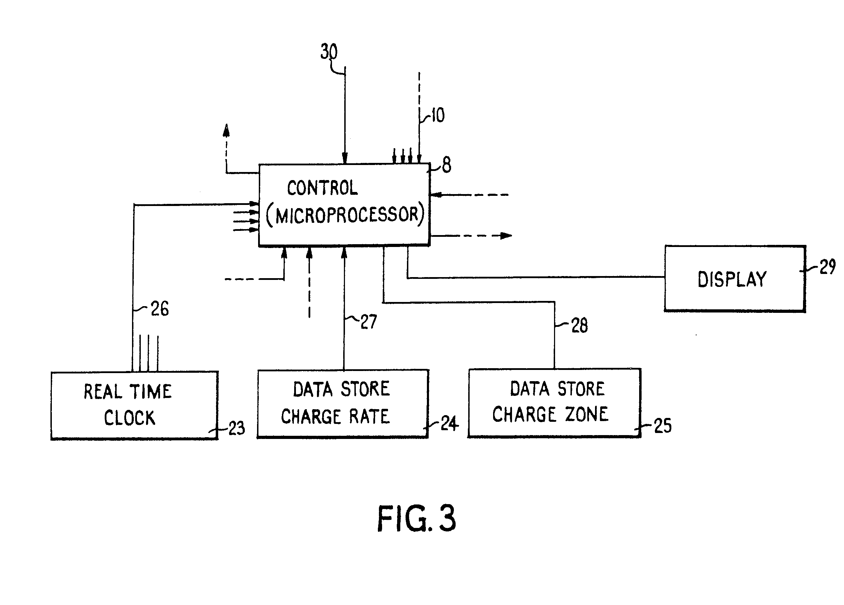

If it is desired to provide facilities for longer distance calls then the apparatus of Figure 1 may be modified by inclusion of the additional elements shown in Figure 3. Thus, referring also to Figure 3 the apparatus further includes two data stores 24 and 25, which may be included in one single data store having two separately addressable storage areas, and a real time clock 23.

It will be realised that the calculation of charging to be applied may be a complicated procedure involving the time of day and/or day of the week and the destination of the call as determined by the signalled digits.

Considering as an example the United Kingdom telephone network, the "British Telecom" authority has three charging rates which are time of day and/or day of week dependent referred to as "peak", "standard" and "offpeak" or "cheap" rate.

Within the "time period" charge rates there are charging rate bands for local calls, trunk calls up to fifty-six kilometres and trunk calls over fifty-six kilometres.

In addition to the time and distance bands referred to for UK national calls there are two time-dependent charging rates for calls to the Channel Islands and two time-depend nt charging rates for calls to the Irish Republic. For international calls there are six charge rate bands, one of which is not time dependent, each of the others having two time-dependent charging rates.

The operation of the charge determining circuitry of the telephone, namely the dial pulse detector 9, the control 8, the data stores 24 and 25 and the real time clock 23, will now be described by reference to Figure 1 and Figure 3.

When the handset of the telephone instrument 1 is raised the dial pulse detector 9 commences monitoring the line to determine the digits (if any) pulsed to the line 2 by use of the instrument dial or keypad. The digits are passed by the dial pulse detector 9 to the control 8 as they are received. The control 8 uses a series of "look up" tables in the data store 25 to determine the destination charge zone of the call in progress which destination may be determined from any of the first six digits.

Having determined the charge zone from the data store 25 and the dialled digits the control 8 applies to the real time clock 23 to provide a time of day and/or day of week to charge period conversion to the data store 24. The charge zone data is then used to select the actual charge rate to be used which charge rate is used by the control 8 to determine at what intervals a payment shall be collected commencing when the call is answered.

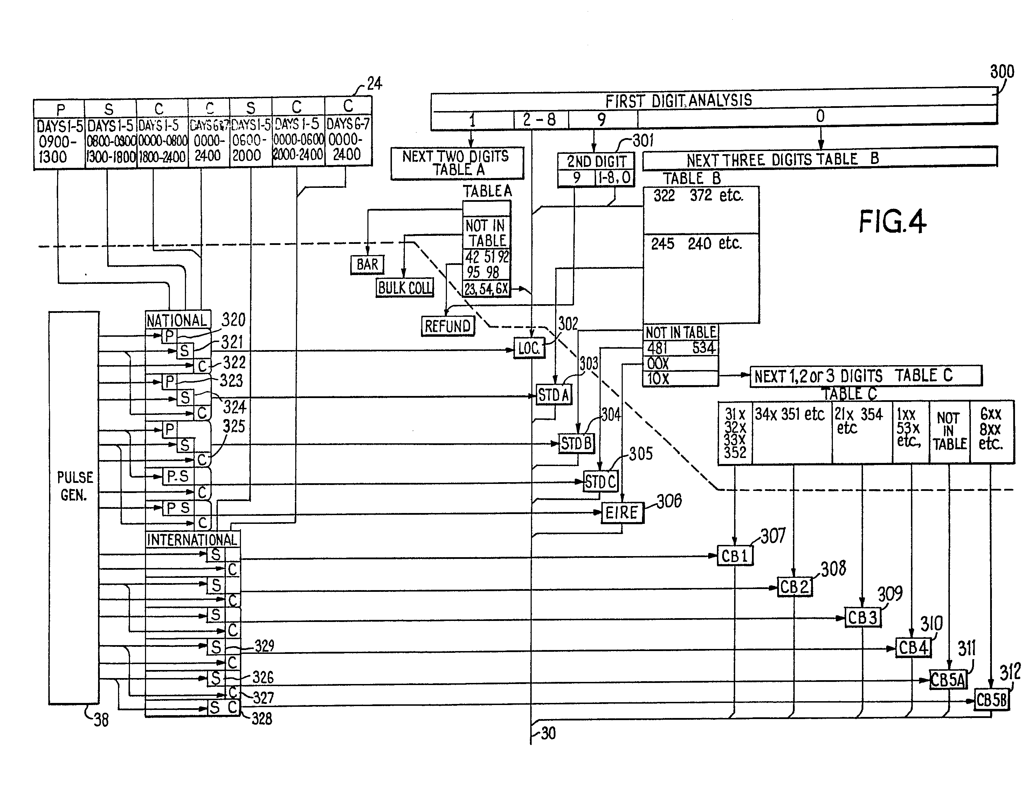

Referring also to Figure 4, which is based on the charging structure of the London, England telephone area, the selection arrangements of the control 8 and organisation of data in the data stores 24 and 25 will now be described.

The dialled digits to charge zone conversion of the data store 24 is carried out by reference to a number of look-up-tables. When a first digit of the telephone number is signalled from the telephone instrument the digit is applied by the control 8 to a look-up-table 300 which in dependance upon the value of the digit refers the control 8 to one of three data tables: table A for digit one, table B for digit 'zero' and 301 for digit nine. For digits one, nine and zero the number of succeeding digits to be applied to the respective data table. If the first digit is in the range two to eight the control 8 determines from the data table 300 that a local rate call has been dialled. Accordingly an AND gate 302 is enabled so that local rate charging pulses pass from the pulse generator 38 to a lead 30 to the control 8.

Should the first digit be 'one' the next two digits signalled from the telephone instrument are applied by the processor 7 to the table 'A'. In the London Area at April 1981 there are a number of "free" services available commencing with digit 'one' these include for example facilities such as

142 - London Area Directory Enquiries

151 - Telephone Fault Reporting

192 - National Directory Enquiries.

If the first digit 'one' is followed by one of the combinations specified in the table as a 'free' call the control 8 is arranged to provide a signal to cause any inserted coins to enter the refund chute 18.

Calls such as for example those to the speaking clock facility (code '123') cause the control 8 to enable the AND gate 302 to permit local charging.

A further area of the data table A is allocated for "barred" codes which cause the control 8 to use the contact 5 to disconnect the line.

Since the majority of codes commencing with the digit 'one' are not in the three categories described in the preceding paragraphs they are not included in the table A. Thus if the control 8 is unable to locate a particular code in the table it is arranged either to disconnect the line as hereinbefore described to prevent calls via operator services or to collect a single payment only regardless of the duration of the call.

The arrangement of table A into local charge rate, refund and barred code data only with the control 8 being arranged to search the table for a dialled code and to arrange "bulk collection" if the code is absent provides a great saving of data storage compared with providing individual data words for each conceivable code. This method of operation is adopted for all of the data tables provided in that the "majority action" codes are not included in the look-up-table.

-11-

Thus, for the London telephone area the first part of Table B, the table to which reference is made when the first digit is '0' comprises the codes 322, 372, 378, 402, 727, 737, 753, 784, 707, 883, 895, 927, 932, 959 and 992.

Thus if any of the four digit codes OXXX specified is dialled the local charging gate 302 is enabled.

The second part of table B comprises the codes 245, 240, 251, 252, 268, 276, 277, 279, 293, 296, 342, 344, 371, 374, 375, 306, 438, 442, 444, 462, 474, 483, 486, 494, 403, 525, 582, 622, 627, 628, 634, 732, 892, 920 and 990.

Thus if any of these codes are dialled an STD charge rate 'A' AND gate 303 is enabled to permit the respective charging pulses to the lead 30.

If the codes '0481' or '0534' are dialled representative of calls to the Channel Islands an STD charge rate 'C' AND gate 305 is opened to permit the respective charging pulses to the lead 30.

If the code '00' is signalled from the telephone instrument then an 'Eire' charge rate AND gate 306 is enabled.

Should the next two digits following the first '0' be '10' then the control 8 is referred to look-up-table C.

The majority of calls from the London area on trunk dialling are in the STD 'B' charge rate band. Thus if the control 8 does not find the dialled digits in table B it enables AND gate 304 to permit the respective STD 'B' charge rate pulses to the lead 30.

A similar method of operation is adopted for use with look-up-table C which is used for international direct dialled calls.

It is unnecessary for a detailed explanation of the codes of table 'C' to be given herein except to complete the codes of the table which have been omitted
from Figure 4 for the sake of clarity.

Codes which cause a charge band 2 AND gate 308
to be enabled are:

34X, 351, 358, 350, 37X, 38X, 39X, 41X, 42X, 43X, 45X,
46X, 47X, 48X, and 49X where "X" is any digit in the range '1' to '0'.

For charge band 3, AND gate 309, the respective
codes are: 21X, 354, 355, 356, 357, 359, 30X, 36X, 40X,
7XX and 90X.

For charge band '4', AND gate 310, the respective
codes are 1XX, 53X, 592, 596, 599, 590, 501 and 509,
whilst for charge band '5B', AND gate 312, the respective
codes are 6XX, 8XX, 91X, 94X, 95X, 960, 976 and 978.

Any codes not included in the table cause charge
band '5A' AND gate 311 to be enabled by the control 8.

It will be appreciated that some higher charging
rates may not be applied by the control 8 if they are
such as to cause an impractical rate of coin insertion.
Thus unless the key switch 15 is operated such calls will
be treated as not permitted and the contact 5 is used to
disconnect the line 2.  It is here noted that when the
keyswitch 15 is operated the control 8 is arranged to
count up the meter pulses and display the accummulated
count on the display panel 29 which may be for example
a liquid crystal diode display.

Having considered the arrangements for enabling
the respective AND gates 302 and 312 detailed consideration
of the pulse generation for the other inputs of the AND
gates 302 and 312 is now required.

As has been previously stated "British Telecom"
has a charging structure comprising three national call
charge rates:  "Peak", "Standard" and "Cheap" and two
international call charge rates "Standard" and "Cheap".
In Figure 4 the charge selection logic shown enclosed
within a dotted line comprises a number of AND gates respectively labelled 'P' for "Peak", 'S' for "Standard" and 'C' for "Cheap" rates.   When a call from the instrument is answered, the control 8 applies to the real time clock 23 for the actual time and compares this with the data stored in the data store 24.

As may be seen the data in the data store 24 is arranged to enable the national "P", "S" and "C" gates at specific times and the international "S" and "C" at respective specific times.

The control 8 may be arranged to apply the time from the real time clock to the data store 24 at periodic intervals throughout the duration of a call so that a call which starts in, say, the "standard" period and terminates in the "cheap" period is charged at an appropriate rate.

The relative periodicity of the pulses applied to each of the AND gates is shown on the respective leads from the pulse generator 38.

Thus if a caller calls a number, say "2XX,XXXX" then if the call is made between 0900 and 1300 Hrs on one of the days 1 to 5 the "AND" gate 302 will be enabled in response to the code-to-charging-zone conversion and, all of the 'P' AND gates being enabled, one pulse every one hundred and twenty seconds will be provided by way of the AND gate 320 and the AND gate 302 to the lead 11.

As a further example a call commencing with the digits '0685', a code not included in table B, on day 6 or 7 (i.e. Saturday or Sunday) will result in one charging pulse every sixty seconds at the lead 30 by way of the AND gate 325 (a "C" gate) and the AND gate 304 (the STD 'B' AND gate).

Similarly a call commencing with the digits "01053" and made between 0600 Hrs and 2400 Hrs on one of days 1 to 5 (i.e. Monday to Friday) will cause one charging pulse to be applied to the lead 30 every thirty seconds by way of the AND gate 329 (an "S" gate) and the

-14-

AND gate 310 (the International charge band 4 gate).

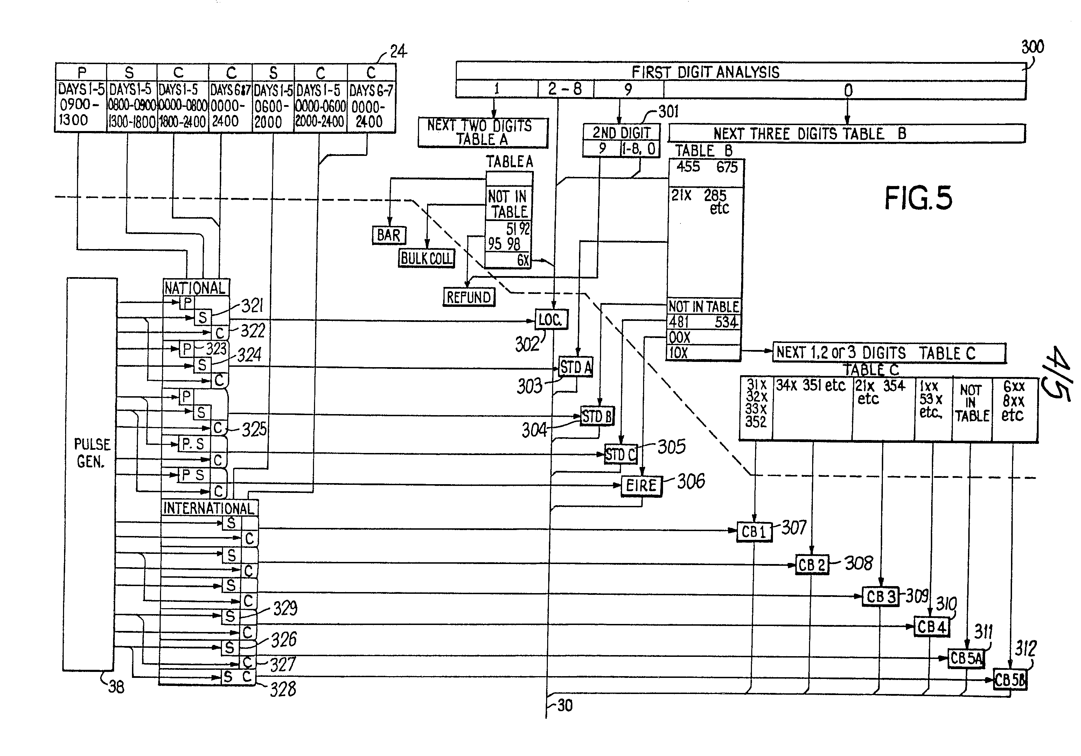

Referring now to Figure 5 which shows the corresponding table for the Coventry, England charging area, the data store 24 and pulse generator 38 with the associated charge rate 'P', 'S' and 'C' AND gates are identical to the equivalent elements of Figure 4.

The data tables 'A', 301 and 'C' are also substantially the same as those of Figure 4.

The data table B is substantially smaller than the equivalent tables in Figure 4 the first part comprising only the codes '455' and '675'. The second part of the data table comprises the codes 21X, 285, 280, 295, 299, 327, 384, 386, 527, 533, 536, 537, 530, 543, 562, 564, 509, 601, 604, 608, 789, 858, 889, 899, 922, 902, 905 and 907.

This is due to Coventry being geographically located in a less densely populated area of the country than London and consequently having less telephone charging centres within fifty six kilometres, fifty six kilometres being the changeover point between charge bands STD 'A' and STD 'B'.

It will be appreciated from consideration of Figures 4 and 5 that the majority of data for an administration such as 'British Telecom' will be common to all telephones for installation within the administrations area.

Thus table 'C' for example may be stored in programmable read-on-memory (PROM) or in an eraseable PROM (EPROM) during manufacture of instruments for the administration. Data tables A and B may be provided in the same or separate PROM or EPROM store which may be programmed at the time of installation.

If the PROM or EPROM storage is of the plug-in-module type then bulk programming techniques may be employed so that the PROM or EPROM appropriate to the area may be plugged into the instrument on installation.

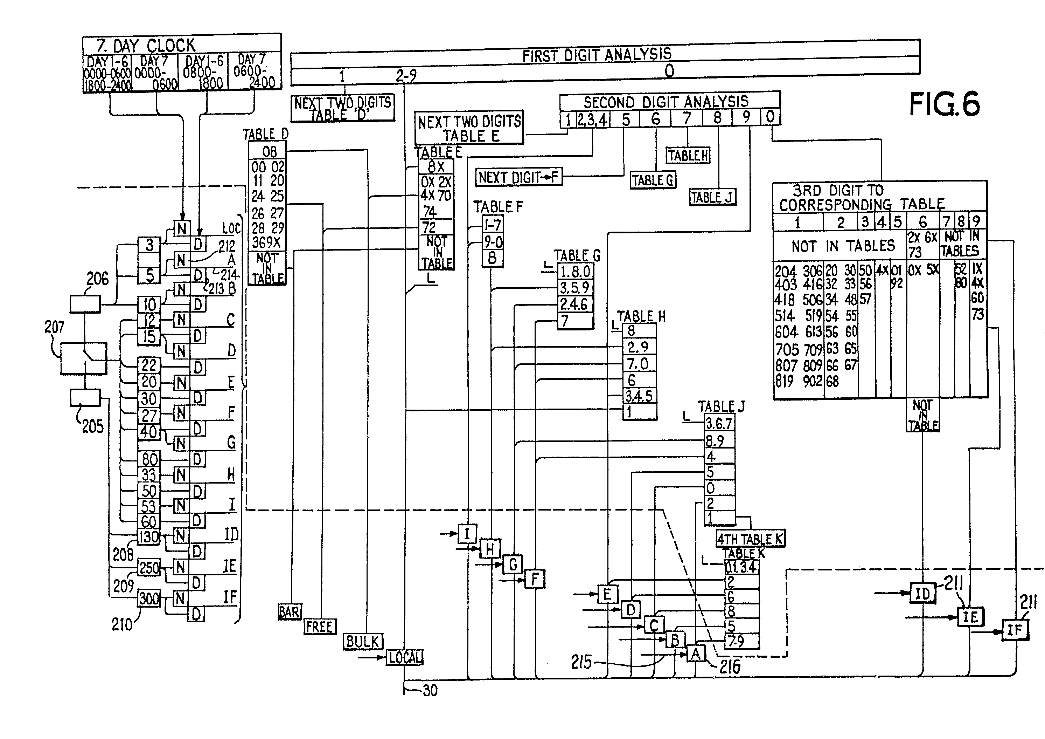

Referring now to Figure 6 a more complicated charging system is shown having a 'local' rate, nine national charge rates and three international charge rates.

The method of analysis of the digits signalled to line is, however, identical to the method of operation of Figures 4 and 5 and is obvious from the data tables.

A metering system is provided comprising a one minute interval pulse generator 205, a three minute interval pulse generator 206 and a charge pulse control circuit 207.

Thus where charging is based on a tarrif per minute or part of a minute the pulse generator 205 is connected to a respective tariff code generator 208, 209, 210 for each of the international charge bands ID to IF so that the appropriate code is gated through respective night (N) rate AND gates or day (D) rate AND gates to charge band AND gates 211 for the ID to IF charge bands. The leads from the charge rate AND gates to the charge band AND gates have been omitted from the figure for the sake of clarity. Respective connections may be readily deduced - for example the AND gates 212 and 213 which output to the lead 214 marked 'A' are connected to a lead 215 to the 'A' charge band AND gate 216.

Similarly the three minute pulse generator 206 is connected to respective 'N' and 'D' AND gates for local and 'A' and 'B' charge rates.

The charge pulse control circuit may be arranged to provide connection from either of the pulse generators 205, 206 to the respective 'N' and 'D' AND gates for the 'C' to 'I' charge rates.

CLAIMS

1.      Coin collecting apparatus for insertion in a line from a telephone instrument to a telephone exchange comprising a pair of terminals for connection to a telephone instrument, a pair of terminals for connection to a line to a telephone exchange, an electrical path between the two pairs of terminals, electrically operable switching means which is connected in the electrical path between the terminals and which is arranged selectively either to complete the electrical path or to interrupt the electrical path between the two pairs of terminals, a payment path to allow a user of the apparatus to provide payment for a call by presentation of a coin, token or other payment device, validation means which is connected to the payment path and which is arranged to provide a signal indicative of the validity of a payment offered, and control means which is arranged to monitor signals on the electrical path which signals determine the destination of a call, said control means being arranged to determine from the signals on the electrical path and from the signal provided by the validation means whether the call is a permitted call and if the call is not a permitted call to cause the switching means to interrupt said electrical path so as to prevent the continuation of such a call.

2.      Coin collecting apparatus as claimed in Claim 1 in which the control means is also arranged to determine from signals on the electrical path calls destined for an emergency number and to permit such calls without a signal from the validation means so that such calls may be made without presentation of a coin, token or other payment device.

3.      Coin collecting apparatus as claimed in Claim 1 or Claim 2 further comprising a detection circuit which is arranged to determine when a call is answered and which is arranged to provide a signal to the control means, indicating such an answer, said control means also being responsive to said signal to cause collection of the offered payment.

4.      Coin collecting apparatus as claimed in Claim 3 in which the detection circuit is responsive to a signal received by way of the terminals connected to an exchange line.

5.      Coin collecting apparatus as claimed in Claim 3 in which the detection circuit is responsive to operation of a manually operable switch of the apparatus to provide the signal to the control means.

6.      Coin collecting apparatus as claimed in Claim 3, Claim 4 or Claim 5 in which the control circuit is arranged to prevent speech signals being transmitted from a connected telephone instrument to a connected exchange line until receipt of the signal from the detection circuit.

7.      Coin collecting apparatus as claimed in any preceding claim in which the control means is arranged to cause a signal requesting presentation of a payment to be sent to a connected telephone instrument at predetermined intervals and is also arranged to cause the switching means to interrupt the electrical path if a further payment is not offered within a predetermined period from the start of such a signal.

8.      Coin collecting apparatus as claimed in Claim 7 further comprising a data store for storing data at least a part of which provides a conversion from a numerical code to one of a plurality of charging zones for each of a plurality of numerical codes and the control means is arranged to determine from signals which determine the destination of the call and from the stored data the predetermined intervals at which the signal requesting presentation of a payment shall be sent.

9. Coin collecting apparatus as claimed in Claim 8 further comprising a real time clock which is arranged to provide signals representative of the actual time and a second data store for storing data which provides a conversion from time of day to charge rate for each of the plurality of charging zones and the control means is also arranged to vary said predetermined intervals in dependance upon the data held in the second data store.

10. Coin collecting apparatus as claimed in Claim 7, Claim 8 or Claim 9 in which the control means is arranged to accumulate a count of the number of the predetermined intervals which have passed since commencement of a call and is also arranged to cause a display of the value of the accumulated count.

11. Coin collecting apparatus as claimed in any preceding claim including a key operable switch which when operated causes the control means to permit any call from a connected telephone without presentation of a coin, token or other payment device.

12. Coin collecting apparatus as claimed in any preceding claim including a tilt detection circuit arranged to provide a signal to the control means if the apparatus is tilted or shaken, and the control means being arranged on detection of such a signal to cause the switching means to interrupt said electrical path.

13. Coin collecting apparatus substantially as hereinbefore described with reference to Figures 1 and 2 of the accompanying drawings.

14.      Coin collecting apparatus substantially as hereinbefore described with reference to the accompanying drawings.

0074721

1/5

**Fig.1**

- 2′ — 21′
- 2 — 21
- LINE REVERSAL DETECTOR (12)
- TONE GENERATOR (14)
- DIAL PULSE DETECTOR (9)
- 5
- 3 4
- 1
- 6
- COIN VALIDATOR (7)
- 10
- 11
- CONTROL (8)
- COLLECT / REFUND
- TILT DETECTION (22)
- KEY SWITCH (15)
- CASH TRAY (13)
- REFUND (18)

**Fig.2**

- 6
- 18
- 16
- 17
- 20
- 19

FIG. 3

FIG.4

FIG. 5

0074721

4/5

| P | S | C | C | S | C | C |
|---|---|---|---|---|---|---|
| DAYS 1-5 0900-1300 | DAYS 1-5 0800-0900 1300-1800 | DAYS 1-5 0000-0800 1800-2400 | DAYS 6&7 0000-2400 | DAYS 1-5 0600-2000 | DAYS 1-5 0000-0600 2000-2400 | DAYS 6-7 0000-2400 |

24

FIRST DIGIT ANALYSIS — 300

| 1 | 2 - 8 | 9 | 0 |
|---|---|---|---|

NEXT TWO DIGITS TABLE A

2ND DIGIT — 301
| 9 | 1-8, 0 |

NEXT THREE DIGITS TABLE B

TABLE A
NOT IN TABLE
51 92
95 98
6X

TABLE B
455  675
21X  285  etc
NOT IN TABLE
481  534
00X
10X

BAR

BULK COLL

REFUND

LOC. — 302

STD A — 303

STD B — 304

STD C — 305

EIRE — 306

NEXT 1,2 or 3 DIGITS  TABLE C

TABLE C
| 31x 32x 33x 352 | 34x 351 etc | 21x 354 etc | 1xx 53x etc. | NOT IN TABLE | 6xx 8xx etc |

NATIONAL
P
S — 321
C — 322
P — 323 — 324
S
C
P
S
C — 325
P.S
C
P S
C

PULSE GEN.

38

INTERNATIONAL
S
C
S
C
S
C
S
C
S — 329
C
S — 326
C — 327
S C — 328

30

CB 1 — 307
CB 2 — 308
CB 3 — 309  310
CB 4
311
CB 5A
312
CB 5B

# FIG.6

**7. DAY CLOCK**

| DAY 1-6 0000-0600 1800-2400 | DAY 7 0000-0600 | DAY 1-6 0800-1800 | DAY 7 0600-2400 |
|---|---|---|---|

**FIRST DIGIT ANALYSIS**

| 1 | 2-9 | 0 |
|---|---|---|

NEXT TWO DIGITS TABLE 'D'

NEXT TWO DIGITS TABLE E

**SECOND DIGIT ANALYSIS**

| 1 | 2,3,4 | 5 | 6 | 7 | 8 | 9 | 0 |
|---|---|---|---|---|---|---|---|

TABLE H
NEXT DIGIT→F
TABLE G
TABLE J

**TABLE D**

| 08 |
|---|
| 00  02 |
| 11  20 |
| 24  25 |
| 26  27 |
| 28  29 |
| 369X |
| NOT IN TABLE |

**TABLE E**

| 8X |
|---|
| 0X 2X |
| 4X 70 |
| 74 |
| 72 |
| NOT IN TABLE |

**TABLE F**

| 1-7 |
|---|
| 9-0 |
| 8 |

**TABLE G**

| 1.8.0 |
|---|
| 3.5.9 |
| 2.4.6 |
| 7 |

**TABLE H**

| 8 |
|---|
| 2.9 |
| 7.0 |
| 6 |
| 3.4.5 |
| 1 |

**TABLE J**

| 3.6.7 |
|---|
| 8.9 |
| 4 |
| 5 |
| 0 |
| 2 |
| 1 |

**3RD DIGIT TO CORRESPONDING TABLE**

| 1 | 2 | 3 | 4 | 5 | 6 | 7 | 8 | 9 |
|---|---|---|---|---|---|---|---|---|
| NOT IN TABLES | | | | | 2X 6X 73 | NOT IN TABLES | | |
| 204 306 | 20 30 | 50 | 4X | 01 92 | 0X 5X | | 52 80 | 1X 4X 60 73 |
| 403 416 | 32 33 | 56 | | 57 | | | | |
| 418 506 | 34 48 | 57 | | | | | | |
| 514 519 | 54 55 | | | | | | | |
| 604 613 | 56 60 | | | | | | | |
| 705 709 | 63 65 | | | | | | | |
| 807 809 | 66 67 | | | | | | | |
| 819 902 | 68 | | | | | | | |

NOT IN TABLE

**4TH TABLE K**

**TABLE K**

| 1.3.4 |
|---|
| 2 |
| 6 |
| 8 |
| 5 |
| 7.9 |

LOC

| 3 | N D | 212 A |
| 5 | N D | 214 213 B |
| 10 | N D | |
| 12 | N D | C |
| 15 | N D | |
| 22 | N D | D |
| 20 | N D | |
| 30 | N D | E |
| 27 | N D | |
| 40 | N D | F |
| 80 | N D | G |
| 33 | N D | |
| 50 | N D | H |
| 53 | N D | |
| 60 | N D | I |
| 130 | N D | ID |
| 250 | N D | IE |
| 300 | N D | IF |

206  207  205  208  209  210

BAR  FREE  BULK  LOCAL

I  H  G  F
E  D  C  B  A

ID 211  IE 211  IF 211

215  216  30

**European Patent Office**

**EUROPEAN SEARCH REPORT**

EP 82 30 4290

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | H 04 M 17/02 |
| Y | US-A-3 243 513 (TORBETT) *Column 1, lines 35-55; column 2, lines 16-24; column 2, lines 40-50; column 6, lines 1-13; column 6, lines 23-28; figure 1* | 1 | |
| A | | 3,4,6 | |
| | --- | | |
| Y | US-A-4 136 262 (CLARK) *Column 1, lines 47-57; column 2, lines 2-23* | 1 | |
| A | | 2,3,11 | |
| | --- | | |
| A | US-A-4 122 308 (WEINBERGER et al.) *Column 1, line 33 - column 2, line 35; column 2, line 67 - column 3, line 47; column 4, lines 46-54; column 10, lines 12-45; column 11, line 58 - column 12, line 20; column 13, line 60 - column 14, line 4; column 15, line 55 - column 16, line 8 * | 1,3,5, 7-10 | TECHNICAL FIELDS SEARCHED (Int. Cl. ³)  H 04 M 17/02 H 04 M 15/30 |
| | --- | | |
| A | DE-C- 935 067 (SIEMENS) *Page 2, lines 11-39* | 1,12 | |
| | --- | | |
| A | FR-A-2 218 814 (SODECO) *Page 2, lines 11-21; page 2, lines 26-37* | 1,2,11 | |
| | ---      -/- | | |

The present search report has been drawn up for all claims

| Place of search THE HAGUE | Date of completion of the search 22-11-1982 | Examiner GERLING J.C.J. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent Office

**EUROPEAN SEARCH REPORT**

| | DOCUMENTS CONSIDERED TO BE RELEVANT | | Page 2 |

| Category | Citation of document with indication, where appropriate, of relevant passages | Relevant to claim | CLASSIFICATION OF THE APPLICATION (Int. Cl. ³) |
|---|---|---|---|
| A | RESEARCH DISCLOSURE, no. 170, June 1978, pages 62-63, Havant, Hants (GB); "Improvements in or relating to telephones". *The whole document* | 1,8-11 | |
| | --- | | |
| A | ELECTRICAL COMMUNICATION, vol. 54, no. 1, 1979, pages 70-75, New York (USA); E.HEIRBAUT et al.: "Universal coin box family". *Page 73, lines 15-33* | 1,7 | |
| | ----- | | |
| | | | TECHNICAL FIELDS SEARCHED (Int. Cl. ³) |

The present search report has been drawn up for all claims

| Place of search THE HAGUE | Date of completion of the search 22-11-1982 | Examiner GERLING J.C.J. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82